# EUROPEAN PATENT APPLICATION

(11) **EP 1 125 729 A1**
(43) Date of publication of application: **22.08.2001**
(21) Application number: 00610021.8
(22) Date of filing: 11.02.2000
(51) Int. Cl.: B32B 15/04, B32B 15/02, E05G 1/024

(54) **Reinforced structure**

(71) Applicant: DENSIT A/S, DK-9100 Aalborg (DK)
(72) Inventor: Knudsen, Michael, 9400 Norresundby (DK)
(74) Representative: Plougmann, Vingtoft & Partners A/S

(57) **Abstract**

The invention relates to reinforced structures comprising an inner metal plate, a matrix material with reinforcing bars embedded therein, and optionally an outer metal plate, wherein the reinforcing bars are wave shaped with peaks of the waves being in contact with and welded to the inner metal plate; a method for producing the reinforced structures; and safes, vaults, strong rooms, shelters and armoured vehicles comprising such reinforced structures.

## Description

### Field of the invention

The present invention relates to reinforced structures for use in safes, bank vaults, etc. and to a method for producing such reinforced structures.

### Background of the invention

In order to guard valuables such as cash against theft from safes or vaults, e.g. from automatic teller machines (ATMs) or bank vaults, such safes or vaults are constructed with a barrier that is difficult to penetrate with normal hand-held tools. These security barriers are therefore constructed from materials with a high resistance to attack using tools such as sledge hammers, hammer and chisel, impact drills, cutting torches and electric hammers. Typically, such security barriers are composite constructions made with different types of steel plates and reinforcement and a hard matrix such as a high-strength concrete.

A typical construction comprises a front (outer) and back (inner) plate of a suitable quality steel, although some constructions have no front plate, a steel reinforcement and a matrix of e.g. a high-density, high-strength concrete. The concrete may be based on a mixture comprising fine Portland cement particles, a relatively large amount of ultrafine particles such as silica fume particles, a relatively large amount of a concrete superplasticizer and a relatively small amount of water, e.g. as described in US 5,234,754. It may further contain a strong aggregate, e.g. calcined bauxite, as described in US 4,588,443.

In addition to their barrier function, the front and back plates may function as shutter boards for the matrix, and the front plate may be provided with an aesthetically pleasing outer surface. A reinforcing mesh is often welded to the back plate in order to provide cooperation between the back plate and the matrix. A wall construction of this type results in a stiffness that is useful when the wall is subjected to impact. This type of wall construction is well known for use in e.g. safes and ATMs and is used by many manufacturers worldwide. A general requirement for such wall constructions is that they are as thin and as lightweight as possible, i.a. because they are often used in multi-storey buildings that are only able to bear a limited load.

A typical wall construction of this type has a front plate with a thickness of about 1-3 mm and a back plate with a thickness of about 4-6 mm, with the distance between the plates typically being about 30-70 mm. The reinforcing mesh welded to the back plate typically has a diameter of about 8 mm in both directions with a distance of about 50 mm between the individual bars. After producing the steel wall construction comprising the metal plates and the reinforcing mesh, the space between the plates is filled with the matrix material mass. For relatively thin constructions of this type, the mass is typically based on either a high-strength concrete as referred to above or a synthetic resin.

Safes and vaults comprising this type of wall construction are often attacked in such a manner that a burglar removes the front sheet using a cutting torch, thereby exposing the outer surface of the matrix. The attack is typically continued using an impact hammer (e.g. sledge hammer) to destroy the matrix, which at the same time deforms the back plate. Due to the powerful effect of the impact hammer, the matrix can be damaged relatively quickly. Once this happens, the construction has lost most of its stiffness, making it easier to create a hole of sufficient size by crushing and removing matrix material. The back plate and the reinforcement can then be cut away using a torch, thus providing access to the interior of the safe or vault. The time required to penetrate the matrix depends on a combination of the stiffness of the overall construction and the strength and toughness of the matrix. The impact resistance of this type of construction can therefore be significantly improved by increasing the construction's stiffness, for example by making it thicker. As noted above, however, it is generally desired to decrease the wall thickness and weight, so improving the impact resistance by making the walls thicker is in most cases disadvantageous and unsuitable in practice.

FR 2 730 520-A1 discloses an armoured wall with an internal metal sheet, an external metal sheet, an intermediate space filled with a mixture of conventional concrete, a binder material such as Inducast® 7000 GT and a bauxite aggregate (available from Densit A/S, Denmark), and reinforcing bars in the form of a mesh structure or spirals embedded in the concrete structure and optionally welded or glued to the internal sheet.

GB 2 262 950 discloses a reinforced concrete structure for a shelter or strong room comprising reinforcement in the form of parallel sheets interconnected by bent arrays comprising rods in planes at right angles to the sheets and with elements parallel to the sheets and interlocked with the bent rods.

FR 2 365 680-A discloses protective plating for doors and walls of strong rooms consisting of a composite wall with external and internal metal plates separated by a space containing steel reinforcement in the form of steel bars bent into spirals and filled with concrete, the spirals being welded to at least one of the metal plates.

WO 98/30769 discloses shaped articles designed to withstand high velocity impact e.g. from projectiles, comprising a high-strength matrix and three-dimensionally arranged tension interlocked reinforcement.

The present invention provides a simple yet effective means of increasing the stiffness, and thus the impact resistance, of reinforced structures for use e.g. as walls in safes and vaults, by using wave shaped reinforcing bars whose peaks are welded to the back plate of the structure. Surprisingly, it has been found that this arrangement of reinforcing bars together with a strong matrix provides a greatly increased impact resistance compared to a similar structure with the same front and back plates as well as the same matrix but with a conventional arrangement of reinforcing bars welded to the back plate.

### Brief disclosure of the invention

In one aspect, the invention relates to a reinforced structure comprising an inner metal plate, a matrix material with reinforcing bars embedded therein, and optionally an outer metal plate, wherein the reinforcing bars are wave shaped with peaks of the waves being in contact with and welded to the inner metal plate.

Another aspect of the invention relates to a safe, vault, strong room, shelter or armoured vehicle comprising at least one reinforced structure as described above.

A further aspect of the invention relates to a method for producing such reinforced structures.

### Detailed description of the invention

As indicated above, the reinforced structure of the invention is based on an inner metal plate and, typically, an outer metal plate, and a matrix material having embedded therein wave shaped reinforcing bars with peaks of the waves welded to the inner plate. It has been found that this arrangement of the reinforcing bars ensures an optimal interaction and cohesion between the matrix material mass and the inner and optional outer metal plates, thereby resulting in significantly improved impact resistance compared to known construction principles.

The term "wave shaped" refers to the fact that the reinforcing bars have a multiplicity of bends so that they have substantially the shape of a wave or a sine curve. This includes sine curve shapes approximating that of a mathematical sine curve, zig-zag shapes in which the bends are more or less rounded, and wave shapes that lie somewhere between a mathematical sine curve and a zig-zag.

While not wishing to be bound by any particular theory, it is believed that the arrangement of the reinforcing bars according to the present invention serves to provide an improved distribution of the stress forces resulting from impact, in particular due to an improved interaction between the back plate and the matrix. These forces are thus distributed over a larger area, providing an improved stiffness in the construction. It has been found that as a result, the construction does not suffer from deformation to the same degree as similar constructions with a different arrangement of the reinforcement. The end result is that a person attempting to break into a safe or vault having a wall structure as described herein must subject the wall to a significantly greater number of impacts, so that the time required to penetrate the wall is substantially increased.

The reinforced structure of the invention is suitable for use in any type of construction in which increased resistance to impact is desired. Such uses include, but are not limited to, safes and vaults, e.g. in banks, businesses and homes, strong rooms, shelters and armoured vehicles such as armoured cars. Particular examples of applications for which the reinforced structure is especially suitable are bank vaults and automatic teller machines.

Although the reinforced structures of the invention will most often be used a wall, or a part of a wall, for a safe, vault, strong room, etc., it will be understood that they are equally suitable for use as a floor, roof or door, in other words as a security barrier in general.

In the present context, the term "peaks" is used for the sake of simplicity to refer to the parts of the wave shaped reinforcing bars that are in contact with and welded to the inner metal plate. It will be clear, however, that the "peaks" in many cases could equally be termed "valleys", e.g. in the case of a reinforced structure of the invention used as the roof of a safe or vault.

In reinforced structures of the invention, the inner and outer metal plates as well as the reinforcing bars may be of any suitable material, e.g. iron or steel. In preferred embodiments of the invention, the metal plates and the reinforcing bars will all be of a suitable grade of steel.

The reinforced structures of the invention may be produced by a method that comprises providing an inner metal plate, and optionally an outer metal plate, and wave shaped reinforcing bars, wherein peaks of the waves are in contact with and welded to the inner metal plate, arranging a matrix material such that the matrix material when hardened is in contact with the inner metal plate and embeds the reinforcing bars, and allowing the matrix material to harden.

Preferably, the wave shaped reinforcing bars are welded to the inner plate at all contact points (i.e. at all peaks, since each wave shaped reinforcing bar defines a plane arranged more or less perpendicular to the plane of the inner plate, with wave peaks being in contact with the inner plate). It will clear, however, that the invention also encompasses embodiments in which only some of the peaks are welded to the inner plate, even though such embodiments are less preferred.

Although the structures of the invention are for the sake of simplicity generally discussed herein with reference to typical constructions comprising both inner and outer metal plates, it will be understood that the outer metal plate is optional. In structures produced without an outer metal plate, the outer surface of the finished reinforced structure will typically be the exterior surface of the matrix material. Such structures without an outer metal plate may therefore be produced using any suitable construction material as an outer shutter board which together with the inner board defines the space in which the matrix material is filled, the shutter board in this case generally being removed from the reinforced structure after curing of the matrix. Alternatively, the reinforced structure may be produced by arranging the inner metal plate, with the wave shaped reinforcing bars welded thereto, horizontally, so that the matrix material can simply be poured onto the inner metal plate (with suitable side walls) so as to embed the reinforcing bars.

In typical structures, the individual wave shaped reinforcing bars will be arranged so that some or all of the reinforcing bars are essentially parallel to each other. In other words, where each reinforcing bar defines a plane, a multiplicity of reinforcing bars will normally be arranged such that the planes defined by the individual bars are substantially parallel to each other.

If desired, individual bars which are parallel to each other can be arranged to be in phase with each other. In a preferred embodiment, however, adjacent reinforcing bars will be phase shifted relative to each other, as this is believed to provide the best result in terms of dissipating forces to which the security barrier is subjected. For example, in one embodiment adjacent bars may be phase shifted approximately one half of a period relative to each other, so that any two bars separated from each other by a single bar will be approximately in phase with each other. The degree of phase shift between adjacent reinforcing bars can vary, however, so that adjacent bars are phase shifted by any desired amount less than one half of a period, e.g. one third of a period, one fourth of a period, etc.

The reinforced structure may further comprise a second multiplicity of reinforcing bars extending in a direction different from the direction in which the first multiplicity of reinforcing bars extends. The angle formed between the first and second multiplicity of bars may be chosen at random, although typically the second multiplicity of reinforcing bars will extend in a direction substantially perpendicular to the direction in which the first multiplicity of reinforcing bars extend. Where an additional multiplicity of reinforcing bars are used, these may be of any desired configuration. The additional bars may thus comprise a further set of wave shaped bars, or they may comprise reinforcing bars having any other conventional configuration, for example straight bars. These additional bars may, if desired, be welded to the wave shaped bars of the invention.

It is of course also possible to use further sets of reinforcing bars, for example a third multiplicity of reinforcing bars extending in a third direction different from the directions in which the first and second multiplicity of reinforcing bars extend.

The reinforcing bars will generally have dimensions similar to those of e.g. steel bars conventionally used in reinforced security barrier structures. Typically, such reinforcing bars have a diameter of about 3-15 mm, such as about 4-12 mm, e.g. about 5-10 mm. Although they normally have a more or less circular cross section, the cross section may be of any suitable shape, e.g. an oval or ellipse, a square, a hexagon, an octagon, etc.

As noted above, the matrix material used in the reinforced structure of the invention will be of a type suited for use in security barriers. Such matrix materials are known *per se* and include resin-based matrixes such as an epoxy-based matrix as well as matrixes based on a hydraulic binder such as a cement. Preferably, the matrix is based on a cement binder.

When the matrix is produced from a cement or other hydraulic binder, the binder particles will preferably be fine particles having a size in the range of from about 0.5 to about 100 µm. In a particularly preferred embodiment, the fine particles such as cement particles are combined with ultrafine particles having a size in the range of from about 5 nm to about 0.5 µm. Typically, the average particle size of the ultrafine particles will be at least one order of magnitude smaller than the average size of the fine particles, thereby allowing the ultrafine particles to become substantially uniformly distributed in the voids between densely packed fine particles to result in an extremely hard and dense matrix that provides optimal resistance to penetration. In these embodiments, the fine particles will typically comprise at least one cement selected from the group consisting of Portland cement, low-alkali cement, sulphate-resistant cement, refractory cement, aluminate cement, slag cement and pozzolanic cement, and the ultrafine particles will typically comprise particles selected from the group consisting of silica fume and oxides such as iron oxide and titanium dioxide.

A matrix based on cement and silica fume is especially preferred. In this case, and when using a combination of fine particles and ultrafine particles in general as discussed above, the matrix material will typically be prepared from a mixture comprising ultrafine particles in an amount of about 5-50% by volume based on the total volume of the fine particles and ultrafine particles in the mixture. More typically, the amount of ultrafine particles will be about 10-40% by volume, such as about 15-30% by volume, based on the total volume of the fine particles and ultrafine particles.

In such mixtures, the amount of water is preferably kept to the minimum required in order to wet the particles and provide a mixture with the required workability. Water is therefore normally added to the mixture in a volume ratio between water and fine+ultrafine particles of about 0.25-1.5, typically about 0.4-1.2, such as about 0.55-1.0, and optionally a concrete superplasticizer.

When using a rather small amount of water as indicated above in a cement-based mixture, the mixture will typically be prepared using a suitable effective amount of a surface-active dispersing agent (also known as a water-reducing agent or plasticizer), preferably a dispersing agent of the type known in the art as "concrete superplasticizers". Examples of suitable concrete superplasticizers are naphthalene-based, melamine-based, vinyl-based, acrylic-based and carboxylic acid-based products, as well as mixtures thereof and derivatives such as vinyl copolymers.

The concrete superplasticizer or other dispersing agent is typically incorporated into mixture (either the dry mixture before water has been added or a wet mixture to which some or all of the water has already been added) in an amount of about 0.01-5% (dry weight based on the total weight of the fine and ultrafine particles), typically about 0.05-4%, more typically about 0.1-3%, such as about 0.2-2%. It will be understood that the amount of superplasticizer to be used in each individual case will depend in part on the nature of the superplasticizer. For example, when using one of the new generation of highly effective vinyl-, acrylic- or carboxylic acid-based superplasticizers, the required dispersing effect can be obtained with a significantly smaller amount of superplasticizer than when using e.g. a naphthalene sulphonic acid/formaldehyde or melamine sulphonic acid/formaldehyde condensation product. Thus, the concrete superplasticizer should be used in an "effective" amount, i.e. effective for the given superplasticizer and in the given particle system to obtain the desired dispersing effect in the mixture using only the intended amount of water.

The matrix will typically further contain aggregate of a type known *per se* in the art. In a preferred embodiment, the aggregate is a strong and hard aggregate with a strength exceeding that of ordinary sand or stone used as aggregate for ordinary concrete. Examples of such strong aggregate particles include topaz, lawsonite, diamond, corundum, phenacite, spinel, beryl, chrysoberyl, tourmaline, granite, andalusite, staurolite, zircon, boron carbide, tungsten carbide, silicon carbide, alumina and bauxite. A preferred strong aggregate material is calcined bauxite.

The matrix may in addition contain reinforcing bodies as is known in the art, in particular fibres or whiskers of any type suitable for use in concrete or mortar, for example steel fibres, organic fibres such as polypropylene fibres, glass or mineral fibres, inorganic non-metallic whiskers such as graphite whiskers, Al₂O₃ whiskers or SiC whiskers, metallic whiskers such as iron or steel whiskers, etc.

### Description of the drawings

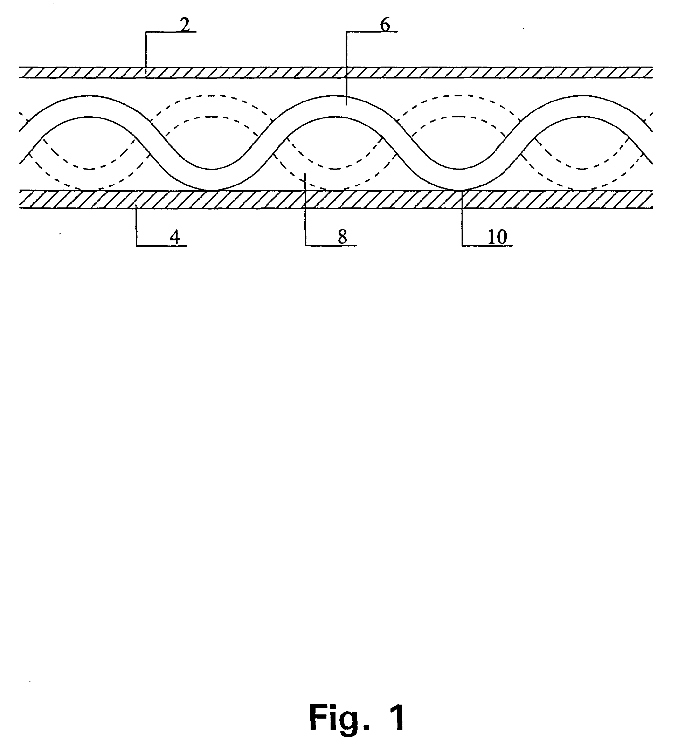

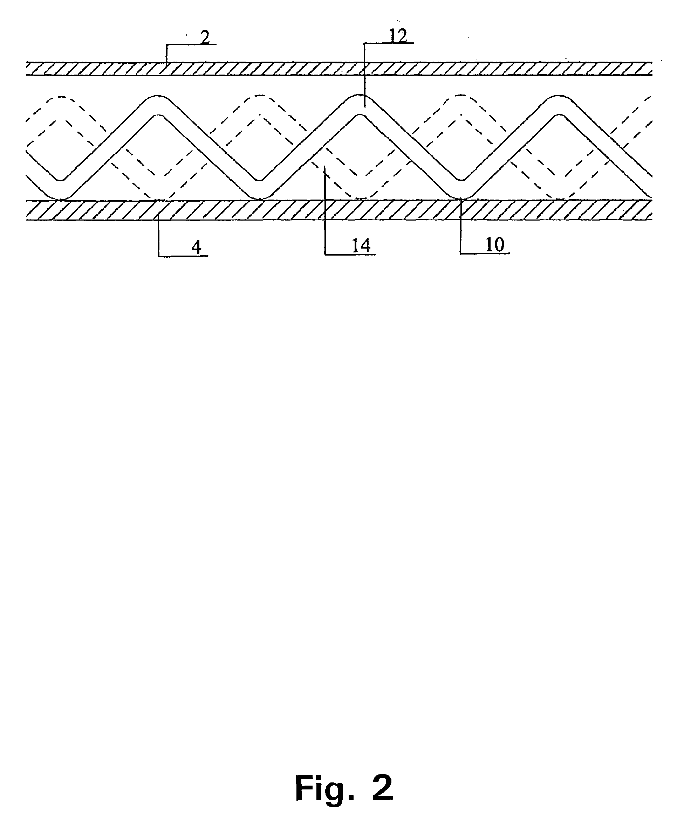

Figs. 1 and 2 each show a sectional side view of a portion of a reinforced wall structure according to the invention.

In Fig. 1 an outer metal plate **2** and an inner metal plate **4** form the inner and outer layers, respectively, of the reinforced wall structure. Sections of two wave shaped reinforcing bars **6**,**8** are inserted between the outer plate **2** and the inner plate **4**. The two wave (sine curve) shaped reinforcing bars **6**,**8** are phase shifted approximately a half a period relative to each other. The peaks **10** of the wave shaped reinforcing bars **6**,**8** are in contact with and welded to the inner plate **4**.

Fig. 2 is similar to Fig. 1, but in this case the phase shifted reinforcing bars **12**,**14** are zig-zag shaped. As in Fig. 1, the peaks **10** are in contact with and welded to the inner plate **4**.

Since both Fig. 1 and Fig. 2 are shown in a horizontal position with the inner plate **4** at the bottom, it will be clear that the "peaks" **10** in this case are "valleys". As mentioned above, however, the term "peak" is used for the sake of simplicity in the present specification.

The invention will be further illustrated by the following non-limiting examples.

### Examples

### Materials and test method

The test method used for testing class III and IV security barriers according to EN 1143-1 is briefly described in the following.

Two examples are illustrated in which panels are tested in accordance with this standard. The panel of Example 1 is reinforced according to the invention, while the panel of Example 2 comprises conventional reinforcement commonly used for such constructions, the matrix in the two examples being prepared from the same material.

In connection with a hammer test of a 40 mm panel construction, data is registered that is relevant for determining "resistance units" (RU). The tools used in this connection have a defined "basic value" (BV). As mentioned above, the test method itself is described in the standard EN 1143-1.

Once the panel is in place in the test apparatus the test is ready to begin. A series of different tests are then performed, each of which gives a number of points. The first test involves cutting the front plate (i.e. the outer plate). A 160 x160 mm hole is cut with a cutting torch, and the time it takes to cut the hole is registered. This time is converted to RU according to the test standard.

The next test is performed with a 3 kg sledge hammer using repeated series of a given number of impacts to create a hole with a diameter of 125 mm. The number of impacts in each series is often e.g. 15, but can be varied as necessary according to the material being tested. A series may thus comprise as little as a single impact. After each impact series, the panel is inspected, and the number of impacts used is noted. When it is judged that sufficient damage has been inflicted from the sledge hammer so that a hammer and chisel would be more efficient, a hammer and chisel is then used to remove the matrix material, and the time is registered.

When all matrix material has been cleaned away from the test area, the reinforcement and then the back plate (inner plate) are burned away using a cutting torch. The time required is again registered for cutting the reinforcement and the back plate, respectively.

Using the data registered as outlined above, an RU value is calculated for the test panel, the calculation being performed as follows:

| **Action** | **Tool** | **Tool coefficient** | **Parameter** | **Calculation of RU** |
|---|---|---|---|---|
| Cutting the front plate | Cutting torch | 7.5 RU | Time (min.) | 7.5 RU x minutes |
| Crushing of matrix material | 3 kg hammer | 7.5 RU | Time (min.) at 30 impacts/min | 7.5 RU x minutes |
| Removing matrix material | Hammer and chisel | 7.5 RU | Time (min.) | 7.5 RU x minutes |
| Cutting of reinforcement | Cutting torch | 7.5 RU | Time (min.) | 7.5 RU x minutes |
| Cutting of back plate | Cutting torch | 7.5 RU | Time (min.) | 7.5 RU x minutes |
| Basic values | Cutting torch: 14.0 RU | | | |
| | 3 kg hammer: 7.5 RU | | | |
| | Chisel: 1 RU | | | |

When the calculations are completed, the individual values are added together to obtain a total which is used to categorise the test material. EN class III requires an RU value of 80 (partial access), while EN class IV requires an RU value of 120 (partial access).

### Example 1

A mixture with the following composition was prepared:

| | % by volume |
|---|---|
| Binder | 57.80 |
| Calcined bauxite (3-6 mm) | 19.85 |
| Steel fibres | 3.00 |
| Water | 19.35 |
| Total | 100.00 |

The binder was a cement-based binder of the type described above containing Portland cement, ultrafine silica fume particles, calcined bauxite (0-1 mm) and a concrete superplasticizer (Flexbinder™, available from Densit A/S, Denmark).

The panels were constructed using wave shaped (zig-zag) Ø 8 mm reinforcing bars according to the invention, in this case with rounded, approximately 90° bends and an amplitude of about 27 mm. The bars were welded onto a 5 mm steel back plate at all contact points, i.e. at all peaks. The distance (center to center) between the reinforcing bars was 50 mm, with adjacent bars being phase shifted one half a period relative to each other. The panels had a 3 mm steel front plate and a total thickness of 40 mm.

The results of the test were as follows:

| Panel 1 | | | | |
|---|---|---|---|---|
| **Action** | **Tool** | **Tool coefficient** | **Time (sec)** | **RU** |
| Cutting the front plate | Cutting torch | 7.5 RU | 45 | 5.6 |
| Crushing of matrix material | 3 kg hammer | 7.5 RU | 210 | 26.25 |
| Removing matrix material | Hammer and chisel | 7.5 RU | 167 | 20.9 |
| Cutting of reinforcement | Cutting torch | 7.5 RU | 88 | 11.0 |
| Cutting of back plate | Cutting torch | 7.5 RU | 70 | 8.8 |
| Basic values | Cutting torch | | | 14.0 |
| | 3 kg hammer | | | 7.5 |
| | Chisel | | | 1.0 |
| Total RU | | | | 95.0 |

| Panel 2 | | | | |
|---|---|---|---|---|
| **Action** | **Tool** | **Tool coefficient** | **Time (sec)** | **RU** |
| Cutting the front plate | Cutting torch | 7.5 RU | 45 | 5.6 |
| Crushing of matrix material | 3 kg hammer | 7.5 RU | 300 | 37.5 |
| Removing matrix material | Hammer and chisel | 7.5 RU | 187 | 23.4 |
| Cutting of reinforcement | Cutting torch | 7.5 RU | 64 | 8.0 |
| Cutting of back plate | Cutting torch | 7.5 RU | 70 | 8.8 |
| Basic values | Cutting torch | | | 14.0 |
| | 3 kg hammer | | | 7.5 |
| | Chisel | | | 1.0 |
| Total RU | | | | 105.8 |

| Panel 3 | | | | |
|---|---|---|---|---|
| **Action** | **Tool** | **Tool coefficient** | **Time (sec)** | **RU** |
| Cutting the front plate | Cutting torch | 7.5 RU | 45 | 5.6 |
| Crushing of matrix material | 3 kg hammer | 7.5 RU | 330 | 41.25 |
| Removing matrix material | Hammer and chisel | 7.5 RU | 108 | 13.5 |
| Cutting of reinforcement | Cutting torch | 7.5 RU | 68 | 8.5 |
| Cutting of back plate | Cutting torch | 7.5 RU | 70 | 8.8 |
| Basic values | Cutting torch | | | 14.0 |
| | 3 kg hammer | | | 7.5 |
| | Chisel | | | 1.0 |
| Total RU | | | | 100.1 |

As shown in the tables above, the three panels produced according to the invention gave the following RU results:

| | |
|---|---|
| Panel 1 | 95.0 RU |
| Panel 2 | 105.8 RU |
| Panel 3 | 100.1 RU |
| Mean | 100.3 RU ± 5.4 |

Further, it may be seen from the tables above that the contribution of the matrix is as follows:

| | |
|---|---|
| Panel 1 | 47 RU |
| Panel 2 | 61 RU |
| Panel 3 | 55 RU |
| Mean | 55.3 RU ± 7.0 |

### Example 2 (comparative example)

The mix recipe for the matrix corresponded to that of Example 1. The basic construction of the panels was also as in Example 1, i.e. with a 5 mm back plate, a 3 mm front plate and a total thickness of 40 mm. The reinforcement in this case was Ø 8 mm steel bars in the form of a mesh with bars every 50 mm (measured center to center) in both directions, and with the bars being welded together at all contact points. The mesh was welded to the back plate at intervals of 150 mm.

The results are shown below:

| Panel 1 | | | | |
|---|---|---|---|---|
| **Action** | **Tool** | **Tool coefficient** | **Time (sec)** | **RU** |
| Cutting the front plate | Cutting torch | 7.5 RU | 45 | 5.6 |
| Crushing of matrix material | 3 kg hammer | 7.5 RU | 176 | 22 |
| Removing matrix material | Hammer and chisel | 7.5 RU | 0 | 0 |
| Cutting of reinforcement | Cutting torch | 7.5 RU | 78 | 9.8 |
| Cutting of back plate | Cutting torch | 7.5 RU | 70 | 8.8 |
| Basic values | Cutting torch | | | 14.0 |
| | 3 kg hammer | | | 7.5 |
| | Chisel | | | 0 |
| Total RU | | | | 67.6 |

| Panel 2 | | | | |
|---|---|---|---|---|
| **Action** | **Tool** | **Tool coefficient** | **Time (sec)** | **RU** |
| Cutting the front plate | Cutting torch | 7.5 RU | 45 | 5.6 |
| Crushing of matrix material | 3 kg hammer | 7.5 RU | 170 | 21.25 |
| Removing matrix material | Hammer and chisel | 7.5 RU | 8 | 1.0 |
| Cutting of reinforcement | Cutting torch | 7.5 RU | 56 | 7.0 |
| Cutting of back plate | Cutting torch | 7.5 RU | 70 | 8.8 |
| Basic values | Cutting torch | | | 14.0 |
| | 3 kg hammer | | | 7.5 |
| | Chisel | | | 1.0 |
| Total RU | | | | 66.1 |

| Panel 3 | | | | |
|---|---|---|---|---|
| **Action** | **Tool** | **Tool coefficient** | **Time (sec)** | **RU** |
| Cutting the front plate | Cutting torch | 7.5 RU | 45 | 5.6 |
| Crushing of matrix material | 3 kg hammer | 7.5 RU | 172 | 21.5 |
| Removing matrix material | Hammer and chisel | 7.5 RU | 31 | 3.9 |
| Cutting of reinforcement | Cutting torch | 7.5 RU | 52 | 6.5 |
| Cutting of back plate | Cutting torch | 7.5 RU | 70 | 8.8 |
| Basic values | Cutting torch | | | 14.0 |
| | 3 kg hammer | | | 7.5 |
| | Chisel | | | 1.0 |
| Total RU | | | | 68.8 |

The RU values of the 3 panels were thus:

| | |
|---|---|
| Panel 1 | 67.6 RU |
| Panel 2 | 66.1 RU |
| Panel 3 | 68.8 RU |
| Mean | 67.5 RU ± 1.4 |

The matrix contributed to the RU values as follows:

| | |
|---|---|
| Panel 1 | 22 RU |
| Panel 2 | 24 RU |
| Panel 3 | 27 RU |
| Mean | 24.3 RU ± 2.5 |

### Conclusion

A comparison of the two examples shows that arranging the reinforcing bars in accordance with the invention results in a greatly increased impact resistance from 67.5 RU to 100.3 RU, an increase of 48%. Significantly, the contribution of the matrix is increased from 24.3 RU to 55.3 RU, an increase of 127%, in spite of the fact that the matrix material is the same in the two examples. The improved impact resistance of the matrix in Example 1 is thus a result of the reinforcement according to the invention compared to the conventional reinforcement in Example 2.

## Claims

1. A reinforced structure comprising an inner metal plate, a matrix material with reinforcing bars embedded therein, and optionally an outer metal plate, wherein the reinforcing bars are wave shaped with peaks of the waves being in contact with and welded to the inner metal plate.

2. A reinforced structure according to claim 1, wherein the matrix material is selected from the group consisting of hydraulic mineral binder-based materials and synthetic resin-based materials.

3. A reinforced structure according to claim 1 or 2, wherein the matrix material is produced from fine particles of a hydraulic binder having a size in the range of from about 0.5 to 100 µm and ultrafine particles having a size in the range of from about 5 nm to about 0.5 µm.

4. A reinforced structure according to claim 3, wherein the fine particles comprise at least one cement selected from the group consisting of Portland cement, low-alkali cement, sulphate-resistant cement, refractory cement, aluminate cement, slag cement and pozzolanic cement, and wherein the ultrafine particles comprise particles selected from the group consisting of silica fume and oxides such as iron oxide and titanium dioxide.

5. A reinforced structure according to any of the preceding claims, further comprising a strong and hard aggregate with a strength exceeding that of ordinary sand or stone used as aggregate for ordinary concrete, e.g. calcined bauxite, and/or fibres or whiskers such as steel fibres.

6. A reinforced structure according to any of the preceding claims, wherein the inner metal plate, the optional outer metal plate and the reinforcing bars are independently selected from the group consisting of iron and steel.

7. A reinforced structure according to any of the preceding claims, wherein each reinforcing bar defines a plane, with a first multiplicity of reinforcing bars being arranged such that their defined planes are substantially parallel to each other, preferably with adjacent reinforcing bars being phase shifted relative to each other.

8. A reinforced structure according to claim 7, further comprising a second multiplicity of reinforcing bars, optionally in the form of wave shaped bars, the second multiplicity of reinforcing bars extending in a direction different from the direction in which the first multiplicity of reinforcing bars extends, e.g. wherein the second multiplicity of reinforcing bars extend in a direction substantially perpendicular to the direction in which the first multiplicity of reinforcing bars extend.

9. A method for producing a reinforced structure, comprising providing an inner metal plate, and optionally an outer metal plate, and wave shaped reinforcing bars, wherein peaks of the waves are in contact with and welded to the inner metal plate, arranging a matrix material such that the matrix material is in contact with the inner metal plate and embeds the reinforcing bars, and allowing the matrix material to harden.

10. A method according to claim 9, wherein the matrix material is selected from the group consisting of hydraulic mineral binder-based materials and synthetic resin-based materials.

11. A method according to claim 9 or 10, wherein the matrix material comprises fine particles of a hydraulic binder having a size in the range of from about 0.5 to 100 µm and ultrafine particles having a size in the range of from about 5 nm to about 0.5 µm.

12. A method according to claim 11, wherein the fine particles comprise at least one cement selected from the group consisting of Portland cement, low-alkali cement, sulphate-resistant cement, refractory cement, aluminate cement, slag cement and pozzolanic cement, and wherein the ultrafine particles comprise particles selected from the group consisting of silica fume and oxides such as iron oxide and titanium dioxide.

13. A method according to claim 11 or 12, wherein the matrix material comprises a mixture comprising ultrafine particles in an amount of about 5-50% by volume based on the total volume of the fine particles and ultrafine particles in the mixture, typically about 10-40% by volume, such as about 15-30% by volume, water in a volume ratio between water and fine+ultrafine particles of about 0.25-1.5, typically about 0.4-1.2, such as about 0.55-1.0, and optionally a concrete superplasticizer.

14. A method according to any of claims 9-13, wherein the inner metal plate, the optional outer metal plate and the reinforcing bars are independently selected from the group consisting of iron and steel.

15. A method according to claim 14, wherein each reinforcing bar defines a plane, with a first multiplicity of reinforcing bars being arranged such that their defined planes are substantially parallel to each other, preferably with adjacent reinforcing bars being phase shifted relative to each other.

16. A safe, vault, strong room, shelter or armoured vehicle comprising at least one reinforced structure according to any of claims 1-8 or produced by the method of any of claims 9-15.
